## Europäisches Patentamt

## European Patent Office

## Office européen des brevets

(11) Veröffentlichungsnummer: **0 317 707**

**A1**

# (12) EUROPÄISCHE PATENTANMELDUNG

(21) Anmeldenummer: **88111942.4**

(22) Anmeldetag: **25.07.88**

(51) Int. Cl.⁴: **B60R 11/02**

(30) Priorität: **26.11.87 DE 3740108**

(43) Veröffentlichungstag der Anmeldung:
**31.05.89 Patentblatt 89/22**

(84) Benannte Vertragsstaaten:
**CH DE ES FR GB IT LI NL SE**

(71) Anmelder: **ROBERT BOSCH GMBH**
**Postfach 10 60 50**
**D-7000 Stuttgart 10(DE)**

(72) Erfinder: **Dürbeck, Horst Peter**
**Kreuznacher Strasse 12**
**D-1000 Berlin 33(DE)**
Erfinder: **Edler, Klaus**
**Tauernallee 6**
**D-1000 Berlin 42(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Verriegelungsvorrichtung für ein elektronisches Gerät.**

(57) Der Erfindung liegt die Aufgabe zugrunde, eine Verriegelungsvorrichtung für ein in ein Gerätefach einschiebbares elektronisches Gerät derart auszubilden, daß zum Verriegeln des Gerätes und zu dessen Entriegeln kein Hilfswerkzeug erforderlich ist und daß das in das Fach vollständig eingeschobene Gerät gegen ein unberechtigtes Entnehmen weitgehend gesichert ist.

Die Lösung der Aufgabe besteht darin, daß an der Rückseite des elektronischen Gerätes ein erstes Verriegelungselement in Form eines Stiftes (18) und an der Innenseite der Rückwand (26) des Gerätefaches (10) ein federnder Hebel (22) mit hakenförmigen Ansatz (23) vorgesehen ist. Bei vollständig in das Gerätefach eingeschobenem Gerät umgreift der Hebel mit seinem hakenförmigen Ansatz den Stift. Ein ebenfalls auf der Innenseite der Rückwand befestigter Hubmagnet (36) schwenkt den Hebel (22) aus der Verriegelungslage, wenn er beim Öffnen eines Zündschalters (55) des Kraftfahrzeuges erregt wird.

Die Verriegelungsvorrichtung eignet sich bevorzugt für ein Funktelefon.

In der Zeichnung ist eine Draufsicht auf das teilweise geschnittene Gerätefach und das in das Gerätefach nur zum Teil eingeschobene elektronische Gerät gezeigt.

Fig. 2

## Verriegelungsvorrichtung für ein elektronisches Gerät

Die Erfindung betrifft eine Verriegelungsvorrichtung nach dem Oberbegriff des Anspruchs 1.

### Stand der Technik

Es ist eine Verriegelungsvorrichtung bekannt (Blaupunkt-Firmendruckschrift Cassetten-Autoradio, Quick out, Impressum: 3 D86 653 004 (10/86), die den Nachteil aufweist, daß zum Entriegeln und Herausnehmen des elektronischen Gerätes ein Hilfswerkzeug erforderlich ist, welches zwischen gegenüberliegenden Seitenwänden des Gerätegehäuses und den entsprechenden Innenwänden des das Gerät aufnehmenden Faches eingeführt werden muß.

### Aufgabe

Der Erfindung liegt die Aufgabe zugrunde, eine Verriegelungsvorrichtung der gattungsgemäßen Art derart weiterzubilden, daß weder zum Verriegeln des elektronischen Gerätes noch zu dessen Entriegeln ein Hilfswerkzeug erforderlich ist und daß das in das Fach vollständig eingeschobene elektronische Gerät gegen ein unberechtigtes Entnehmen weitgehend gesichert ist.

### Lösung und erzielbare Vorteile

Diese Aufgabe wird bei einer gattungsgemäßen Verriegelungsvorrichtung durch die kennzeichnenden Merkmale des Anspruchs 1 gelöst.

Die mit der Erfindung erzielbaren Vorteile bestehen insbesondere darin, daß das Verriegeln und Entriegeln des elektronischen Gerätes in dem Gerätefach ohne ein Hilfswerkzeug vorgenommen werden kann und daß die Mittel zum Verriegeln bzw. Entriegeln des in dem Gerätefach befindlichen Gerätes von der Außenseite des Faches bzw. des Gerätes nich sichtbar und nicht erreichbar sind.

Um bei einer derartigen Verriegelungsvorrichtung den Diebstahlschutz zu erhöhen, ist die Verriegelungsvorrichtung nach einer weiteren Ausbildung der Erfindung dadurch gekennzeichnet, daß ein auf der Innenseite der Rückwand des Gerätefaches befestigter Federkörper beim Einschieben des Gerätes in das Gerätefach derart gespannt wird, daß er bei vollständig in das Gerätefach eingeschobenem Gerät eine das Lösen der Verriegelung durch den erregten Hubmagneten verhindernde Kraft auf die Verriegelung ausübt, die nur durch eine von dem Benutzer auf die Frontseite des Gerätes ausgeübte Druckkraft überwindbar ist. Das Herausnehmen des in dem Gerätefach befindlichen Gerätes ist also nur nach Öffnen des Zündschalters bzw. nach dem Ausschalten der Zündung und nach Ausüben eines Druckes auf die Frontseite des Gerätes möglich.

Ein bevorzugtes Anwendungsgebiet für die Erfindung ist ein in einem Gerätefach eines Kraftfahrzeuges untergebrachtes Funktelefon.

### Beschreibung eines Ausführungsbeispiels

Ein Ausführungsbeispiel der Erfindung ist in der Zeichnung an Hand mehrerer Figuren dargestellt und wird im folgenden näher beschrieben. Es zeigen

Fig. 1 eine Frontansicht eines Gerätefaches ohne eingeschobenes elektronisches Gerät,

Fig. 2 eine Draufsicht auf das Gerätefach nach Fig. 1, teilweise im Schnitt, mit nur zum Teil eingeschobenem elektronischen Gerät,

Fig. 3 eine Ansicht der Rückseite des elektronischen Gerätes in Pfeilrichtung III der Fig. 2 gesehen,

Fig. 4 eine Draufsicht auf das Gerätefach nach Fig. 1 mit vollständig in das Gerät eingeschobenem elektronischen Gerät und

Fig. 5 ein stark vereinfachtes Schaltbild für einen elektronischen Zeitschalter.

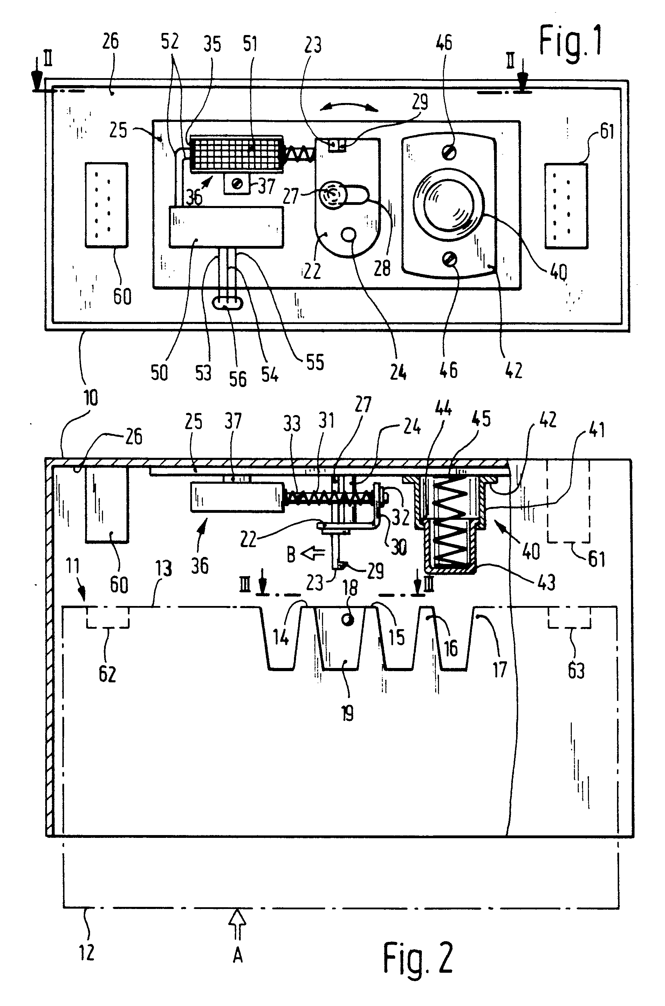

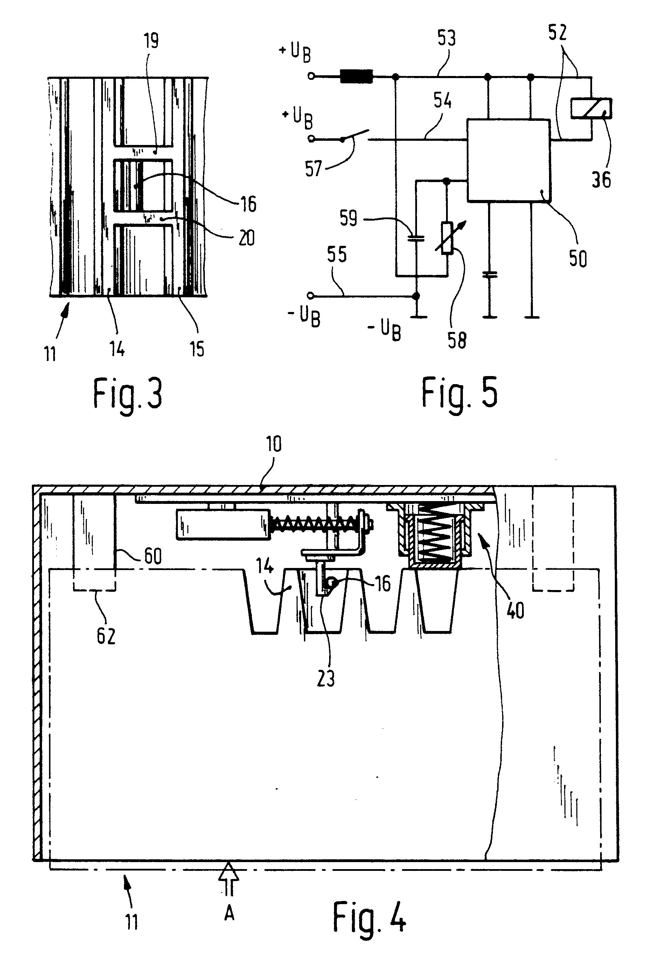

In den Fig. 1, 2 und 4 ist ein vorzugsweise aus Blech bestehendes, quaderförmiges Gerätefach 10 zur Aufnahme eines elektronisches Gerätes 11 mit quaderförmigem Gehäuse 12 gezeigt. Das Gehäuse trägt auf seiner Rückseite 13 mehrere parallele Kühlrippen, von denen in den Fig. 2 und 4 und einige mittlere Kühlrippon 14, 15, 16, 17 zu sehen sind. Zwischen zwei benachbarten Kühlrippon 14, 15 ist achsparallel zu diesen ein ein erstes Verriegelungselement bildender Stift 18 vorgesehen, dessen Enden in zwei rechtwinklig zu den Kühlrippen stehenden Wänden 19, 20 befestigt sind; vgl. Fig. 3.

Ein zweites Verriegelungselement der Verriegelungsvorrichtung bildet ein Hebel 22 mit einem hakenförmigen Ansatz 23, dessen freies Ende eine Schräge 29 aufweist. Der Hebel ist um eine Welle 24 schwenkbar, die lotrecht auf einer ebenen Grundplatte 25 angeordnet ist. Die Grundplatte ist fest mit der Innenseite der Rückwand 26 des Gerätefaches 10 verbunden. Die Schwenkbewegung des Hebels 22 um die Welle 24 begrenzt ein vorzugsweise nietartiger Stift 27 in Verbindung mit einem Querschlitz 28 des Hebels. Der Hebel hat einen in Fig. 2 nach oben weisenden Schenkel 30, den ein Anker 31 durchsetzt, dessen freies Ende einen Sicherungsring 32 trägt. Auf dem Anker 31 sitzt lose eine Druckfeder 33, die sich mit einem Ende an dem Schenkel 30 und mit dem anderen Ende an einem Wickelkörper 35 eines Hubmagneten 36 abstützt. Der Hubmagnet ist zum Beispiel mittels einer Lasche 37 mit der Grundplatte 25 fest verbunden.

Neben dem Hebel 22 befindet sich auf der Grundplatte ein Federkörper 40, der aus einem hohlzylindrischen Teil 41 mit einem Flansch 42, einem in dem Teil 41 verschiebbar gelagerten kappenförmigen Teil 43 mit einem Flansch 44 und einer im Innern der Teile 41 und 43 enthaltenen Druckfeder 45 besteht. Der Federkörper 40 ist vorzugsweise mittels zweier den Flansch 42 durchsetzender Schrauben 46 (vgl. Fig. 1) auf der Grundplatte 25 befestigt.

Ein elektronischer Zeitschalter 50 zum Steuern des Hubmagneten 36 befindet sich zum Beispiel auf der Grundplatte 25 in unmittelbarer Nähe des Hubmagneten 36 und des Hebels 22. Eine auf dem Wickelkörper 35 sitzende Wicklung 51 steht über Leitungen 52 mit Anschlüssen des elektronischen Zeitschalters 50 in Verbindung. Der Zeitschalter steht über weitere Leitungen 53, 54, 55, die durch eine Öffnung 56 in der Rückwand 26 des Gerätefaches 10 nach außen geführt sind, mit einem Kraftfahrzeug-Akkumulator der Spannung $U_B$ in Verbindung; vgl. auch Fig. 5. In der Leitung 54 befindet sich ein Zündschalter 57 zum Ein- und Ausschalten der Zündung des Kraftfahrzeuges. Ein Einstellwiderstand 58 bildet in Verbindung mit einem Kondensator 59 ein Zeitkonstantenglied für den elektronischen Zeitschalter 50.

Zu beiden Seiten der Grundplatte 25 sind an der Rückwand 26 des Gerätefaches 10 zwei Steckverbinderteile 60, 61 befestigt, die mit entsprechenden Steckverbinderteilen 62, 63 an der Rückwand 13 des elektronischen Gerätes 11 korrespondieren.

Die Funktion der vorstehend beschriebenen Verriegelungsvorrichtung ist folgende.

Wird das elektronische Gerät 11 mit seiner Rückseite 13 voran in das Gerätefach 10 geschoben, vgl. Pfeilrichtung A in Fig. 2, so stößt es zuerst gegen das kappenförmige Teil des 43 Federkörpers 40, der dadurch zusammengedrückt bzw. dessen Druckfeder 45 gespannt wird. Danach stößt der hakenförmige Ansatz 23 des Hebels 22 gegen den Stift 18 an der Rückseite 13 des Gerätes. Der Hebel 22 weicht infolge der Schräge 29 des hakenförmigen Ansatzes 23 beim weiteren Einschieben des Gerätes entgegen der Kraft der Druckfeder 33 in Pfeilrichtung B (Fig. 2) aus und schnappt, wenn das Gerät vollständig eingeschoben ist, hinter den Stift 18; vgl. Fig. 4. Gleichzeitig kommen die Steckverbinderteile 60, 62; 61, 63 in Kontakt. Das Gehäuse 12 des elektronischen Gerätes 11 steht im eingeschobenen Zustand - wie in Fig. 4 zu sehen - nur geringfügig aus dem Gerätefach 10 hervor, so daß es mit der Hand nicht zum Zwecke des Herausziehens ergriffen werden kann.

Das Herausziehen des elektronischen Gerätes aus dem Gerätefach ist nur möglich, wenn der Zündschalter 55 zum Stillsetzen des Kraftfahrzeug-Motors geöffnet wird, das heißt, wenn die Zündung ausgeschaltet wird. Der durch das Öffnen des Zündschalters 55 entstehende Impuls triggert den Zeitschalter 50, der für eine durch das Zeitkonstantenglied 58, 59 (Fig. 5) vorgegebene Zeit t einen Stromkreis zum Erregen des Hubmagneten 36 schließt. Die Kraft, mit der der Federkörper 40 gegen die Rückseite 13 des elektronischen Gerätes 11 drückt und damit die mechanische Verbindung zwischen dem hakenförmigen Ansatz 23 und dem Stift 18 festhält, ist größer gewählt als die Kraft, mit der der Hubmagnet 36 bzw. dessen Anker 31 den Hebel 22 in Pfeilrichtung B (Fig. 2) zu bewegen versucht. Mit dem Ausschalten der Zündung allein kann somit das Gerät 11 noch nicht aus dem Gerätefach 10 herausgenommen werden. Hierzu ist es vielmehr nötig, das Gerät von Hand in Pfeilrichtung A (Fig. 4) zu drücken. Dann wird nämlich der Federkörper 40 noch etwas weiter zusammengedrückt und die Verbindung zwischen dem hakenförmigen Ansatz 23 und dem Stift 18 etwas gelöst, so daß die Kraft des Hubmagneten 36 ausreicht, den Hebel 22 in Pfeilrichtung B (Fig. 2) zu bewegen, wodurch die mechanische Verbindung zwischen dem Ansatz 23 und dem Stift 18 gelöst wird. Die dem zusammengedrückten Federkörper 40 innewohnende Kraft sorgt dann dafür, daß das elektronische Gerät 11 entgegen der Pfeilrichtung A (Fig. 4) unter Trennung der Steckverbinderteile 60, 62; 61, 63 so weit aus dem Gerätefach 10 hinausgestoßen wird, daß es bequem mit einer Hand ergriffen und dann vollständig herausgezogen werden kann.

Die zum Herausnehmen des elektronischen Gerätes aus dem Gerätefach zur Verfügung stehende Zeit t kann mittels des Einstellwiderstandes 56 festgelegt werden. Der elektronische Zeitschalter 50 ist ein dem Fachmann bekannter Timer-Baustein.

## Ansprüche

1. Verriegelungsvorrichtung für ein in ein Gerätefach eines Kraftfahrzeuges eingeschobenes elektronisches Gerät, mit einem ersten Verriegelungselement an der Außenseite des Gerätes und mit einem mit dem ersten Verriegelungselement korrespondieren zweiten Verriegelungselement im Innern des Gerätefaches, dadurch gekennzeichnet, daß das erste Verriegelungselement ein an der Rückseite (13) des Gerätes (11) fest angeordneter Stift (18) ist und daß das zweite Verriegelungselement ein auf der Innenseite der Rückwand (26) des Gerätefaches (10) angeordneter federnder Hebel (22) mit hakenförmigem Ansatz (23) ist, der bei vollständig in das Gerätefach eingeschobenem Gerät den Stift umgreift, und daß der Hebel (22) mit einem Anker (31) eines ebenfalls auf der Innenseite der Rückwand (26) befestigten Hubmagneten (36) verbunden ist, der beim Öffnen des Zündschalters (55) des Kraftfahrzeuges erregt wird und die Verriegelung zwischen Hebel (22) und Stift (18) löst.

2. Verriegelungsvorrichtung nach Anspruch 1, dadurch gekennzeichnet, daß ein auf der Innenseite der Rückwand (26) des Gerätefaches (10) befestigter Federkörper (40) beim Einschieben des Gerätes in das Gerätefach derart gespannt wird, daß er bei vollständig in das Gerätefach eingeschobenem Gerät eine das Lösen der Verriegelung durch den erregten Hubmagneten verhindernde Kraft auf die Verriegelung ausübt, die nur durch eine von dem Benutzer auf die Frontseite des Gerätes ausgeübte Druckkraft überwindbar ist.

3. Verriegelungsvorrichtung nach Anspruch 1, dadurch gekennzeichnet, daß der durch das Öffnen des Zündschalters (57) des Kraftfahrzeuges geschlossene Stromkreis für den Hubmagneten (36) für eine vorgegebene Zeit (t) geschlossen wird, innerhalb der der Benutzer die Druckkraft zum Entriegeln der Verriegelungsvorrichtung auf das elektronische Gerät (11) ausüben muß.

4. Verriegelungsvorrichtung nach Anspruch 3, dadurch gekennzeichnet, daß die vorgegebene Zeit (t) an einem mit der Kraftfahrzeugbatterie verbundenen elektronischen Zeitschalter (50), der im Stromkreis des Hubmagneten (36) liegt, einstellbar ist.

5. Verriegelungsvorrichtung nach einem der Ansprüche 1 bis 4, dadurch gekennzeichnet, daß der Federkörper (40) aus einem hohlzylindrischen Teil (41) mit einem Flansch (42), einem in dem hohlzylindrischen Teil verschiebbar gelagerten kappenförmigen Teil (43) und einer in dem hohlzylindrischen Teil (41) und dem kappenförmigen Teil (43) enthaltenen Druckfeder (45) besteht.

6. Verriegelungsvorrichtung · nach einem der Ansprüche 1 bis 5, dadurch gekennzeichnet, daß der Hubmagnet (36), der federnde Hebel (22), der Federkörper (40) und der elektronische Zeitschalter (50) auf einer auf der Innenseite der Rückwand (26) des Gerätefaches (10) befestigten Grundplatte (25) angeordnet sind.

7. Verriegelungsvorrichtung nach Anspruch 1 oder 6, dadurch gekennzeichnet, daß der federnde Hebel (22) zum Begrenzen der Schwenkbewegung einen Querschlitz (28) aufweist, den ein auf der Grundplatte (25) befestigter, nietartiger Stift (27) durchsetzt.

EP 0 317 707 A1

Fig. 1

Fig. 2

EP 0 317 707 A1

Fig. 3

Fig. 5

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 708 349 (KÖSTER) <br> * Ansprüche 1-6; Seite 6, Zeile 20 - Seite 7, Zeile 10; Figuren 1-3 * <br> --- | 1 | B 60 R 11/02 |
| A | FR-A-2 592 345 (AUTOSONIK) <br> * Anspruch 1; Figuren 1-4 * <br> --- | 1 | |
| A | DE-A-3 529 136 (NILSSEN) <br> * Anspruch 1; Figuren 1,2 * <br> --- | 1 | |
| A | DE-U-8 421 441 (PHILIPS GmbH) <br> * Seite 9, Zeile 7 - Seite 10, Zeile 12; Figuren 2,3 * <br> --- | 1,2,5,7 | |
| A | FUNKSCHAU, Nr. 4, 13. Februar 1987, Seiten 28-32, München, DE; <br> "Diebstahlschutz: So sicher wie im Safe aus Glas" <br> * Seite 29, Spalte 2, Zeilen 4-16; Seite 30, Spalte 3, Zeilen 41-56 * <br> ----- | 1,3,4,6 | RECHERCHIERTE SACHGEBIETE (Int. Cl.4) <br><br> B 60 R |

Der vorliegende Recherchenbericht wurde für alle Patentansprüche erstellt

| Recherchenort | Abschlußdatum der Recherche | Prüfer |
|---|---|---|
| DEN HAAG | 22-02-1989 | MAUSSER,T. |